(19) Europäisches Patentamt
European Patent Office
Office européen des brevets

(11) EP 4 359 479 B1

(12) **EUROPEAN PATENT SPECIFICATION**

(45) Date of publication and mention of the grant of the patent:
**31.12.2025 Bulletin 2026/01**

(21) Application number: **22751178.9**

(22) Date of filing: **20.05.2022**

(51) International Patent Classification (IPC):
***C09D 5/00*** *(2006.01)*

(52) Cooperative Patent Classification (CPC):
**C09D 5/00**

(86) International application number:
**PCT/US2022/030165**

(87) International publication number:
**WO 2022/271359 (29.12.2022 Gazette 2022/52)**

(54) **AQUEOUS DISPERSION OF FILM-FORMING AND NON-FILM-FORMING POLYMER PARTICLES**

WÄSSRIGE DISPERSION FILMBILDENDER UND NICHT FILMBILDENDER POLYMERPARTIKEL

DISPERSION AQUEUSE DE PARTICULES POLYMÈRES FILMOGÈNES ET NON FILMOGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2021 US 202163212985 P**

(43) Date of publication of application:
**01.05.2024 Bulletin 2024/18**

(73) Proprietors:
- **Rohm and Haas Company**
  **Collegeville, PA 19426 (US)**
- **Dow Global Technologies LLC**
  **Midland, MI 48674 (US)**

(72) Inventors:
- **GREYSON, Eric C.**
  **Collegeville, Pennsylvania 19426 (US)**
- **GALLAGHER, Joy A.**
  **Collegeville, Pennsylvania 19426 (US)**
- **COOPER, Richard**
  **Schwenksville, Pennsylvania 19473 (US)**

(74) Representative: **Beck Greener LLP**
**Fulwood House**
**12 Fulwood Place**
**London WC1V 6HR (GB)**

(56) References cited:
**EP-A1- 3 467 053**
**EP-A2- 0 764 699**
**WO-A1-2014/047094**
**WO-A1-2016/209691**
**WO-A1-2019/211473**
**JP-A- 2005 097 574**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 359 479 B1

## Description

Background of the Invention

The present invention relates to a composition comprising an aqueous dispersion of film-forming and non-film-forming polymer particles. The composition is useful as a traffic paint.

Waterborne quick-drying traffic paint is a popular and low-cost product used to improve roadway safety. To be effective as a traffic paint, four critical properties are required: (i) paint durability on the road as measured by presence and retroreflectivity over time; (ii) color retention and resistance to dirt, tire marks and other stains; (iii) dry time at high humidity; and (iv) paint stability. Of these, color retention presence a special challenge. Although this property can be improved by reducing the volume fraction of film-forming latex in the paint in favor of increased levels of non-film-forming pigment or filler, paint durability on the road has often found to be catastrophically compromised. Accordingly, it would be an advance in the art of water-borne traffic paints to discover a way to improve color retention without sacrificing paint durability.

EP3467053 discloses a coating composition comprising an aqueous dispersion of a) carboxylate salt functionalized first thermoplastic polymer particles; b) second thermoplastic polymer particles imbibed with a thermosettable compounds and functionalized with anti-agglomerating groups; c) an extender; and d) a volatile base. The composition is suitable as a waterborne quick-set formulation useful as a traffic paint.

EP0764699 discloses a method of producing a wear resistant traffic paint composition comprising a low GPC number average molecular weight latex binder which, when applied to the road surface, exhibits improved wear resistance over paint compositions having high GPC number average molecular weight latex binders. The wear resistance is further enhanced by modifying the latex polymer used in the composition with acetoacetyl functional pendant moiety and amino silane.

WO2019/211473 discloses a colloidal dispersion comprising a liquid dispersion medium and negatively charged plate-like tactoids arranged in a preferred direction in the dispersion medium, wherein the dispersion medium contains one or more organic polymers selected from the group consisting of anionically and/or non-ionically stabilized organic polymers, water and optionally one or more organic solvents; wherein the tactoids consist of an exfoliated inorganic layer material and have a plurality of individual plates that are arranged parallel to one another and have a layer thickness in the range of 0.5 to 1.5 nm and an average layer spacing in the range of 5 to 50 nm; wherein the average aspect ratio of the individual plates constituting the tactoids is 100 to 1000; the exfoliated inorganic layer material has been exfoliated without the use of an exfoliating agent or using a monomeric exfoliating agent; and the weight of the inorganic layer material without the exfoliating agent is 2 to 35 wt% relative to the total weight of the colloidal dispersion. The colloidal dispersion can be used for preparing a coating composition.

WO2016/209691 discloses a latex product composition that includes an anionically-stabilised latex; at least one volatile base compound; and one or more water soluble polymers or polymeric adducts that have a backbone with a plurality of amine functional groups and hydroxyl functional groups. The polymers or polymeric adducts may be an addition product formed from at least one multifunctional amine compound reacted with one or more polyfunctional epoxy compounds, one or more monofunctional epoxy compounds, or a combination thereof. The polymers or polymeric adducts are formed by the addition reaction of the amine compounds and the one or more epoxy compounds with 1.3 to 3.8 amine functional groups per epoxy functional group. The addition product may be present in about 0.1 to 15.0 wt% and the at least one volatile base compound is present in about 1.0 to 10.0 wt% based on the weight of the particles present in the anionically-stabilised latex.

WO2014/047094 discloses an aqueous coating composition including: particular amounts of certain first solid polymeric particles having an average diameter of 0.60-0.99 $\mu$m; certain second solid polymeric particles having an average diameter of 2-20 $\mu$m, and mixtures thereof; and third solid polymeric particles having a calculated Tg of from -60 °C to 120 °C and an average particle diameter of from 50 nm to 500 nm; wherein the second solid polymeric particles have a K10 value of less than $1.9 \times 10^{10}$ $N/m^2$; wherein the difference between the refractive index of the outer surface of the second solid polymeric particles and the refractive index of the third solid polymeric particles is between $10^{-4}$ and $10^{-2}$; and wherein the aqueous coating composition comprises less than 10% by volume of inorganic extender particles. The composition can be used to form a low-glare coating.

JP2005 097574 discloses a raw material for moulding that provides a flame-retardant resin composition which also has acceptable physical properties such as to improve productivity, comprising polyolefin resin in 54.5 to 86 % by mass, ammonium polyphosphate in 12 to 32% by mass, a compound of formula I such as THEIC at 1 to 3.5% by mass and an amine compound having at least one N atom and at least one acid selected from phosphoric acid, pyrophosphoric acid, condensed phosphoric acid and cyanuric acid, 0.03 to 3 parts by mass of metal compound, and PTFE-based particles mixed with organic polymer particles or talc.

Summary of the Invention

The present invention addresses a need in the art by providing a composition comprising an aqueous dispersion of 1) first polymer particles having a calculated $T_g$ in the range of from -15 °C to 30 °C; 2) second polymer particles having a calculated $T_g$ in the range of from 50 °C to 110 °C; 3) extender particles; 4) opacifying pigment particles; and 5) ammonia or a volatile amine or a salt thereof;

with the proviso that the second polymer particles have a $T_g$ of at least 20 C° higher than the first polymer particles;
wherein the first and second polymer particles are acrylic, styrene-acrylic, urethane, alkyd, vinyl ester or vinyl acetate-ethylene polymeric dispersions, or combinations thereof;
wherein the extender particles comprise silica, talc, clay, mica, sericite, $CaCO_3$, nepheline syenite, feldspar, wollastonite, kaolinite, dicalcium phosphate, or diatomaceous earth;
wherein the opacifying pigment particles are $TiO_2$, ZnO, or opaque polymers;
and wherein, based on the weight of the composition:

the first and second polymer particles together have a solids content in the range of from 10 to 20 weight percent;

the extender particles have a solids content in the range of from 45 to 70 weight percent;

the opacifying pigment particles have a solids content in the range of from 3 to 15 weight percent; and

the composition has a total solids content in the range of from 60 to 85 weight percent;

wherein the w/w ratio of the first polymer particles to the second polymer particles is in the range of from 30:70 to 90:10.

The composition of the present invention provides a coated traffic paint with excellent color retention and durability.

Detailed Description of the Invention

The present invention is a composition comprising an aqueous dispersion of 1) first polymer particles having a calculated $T_g$ in the range of from -15 °C to 30 °C; 2) second polymer particles having a calculated $T_g$ in the range of from 50 °C to 110 °C; 3) extender particles; 4) opacifying pigment particles; and 5) ammonia or a volatile amine or a salt thereof;

with the proviso that the second polymer particles have a $T_g$ of at least 20 C° higher than the first polymer particles,
wherein the first and second polymer particles are acrylic, styrene-acrylic, urethane, alkyd, vinyl ester or vinyl acetate-ethylene polymeric dispersions, or combinations thereof;
wherein the extender particles comprise silica, talc, clay, mica, sericite, $CaCO_3$, nepheline syenite, feldspar, wollastonite, kaolinite, dicalcium phosphate, or diatomaceous earth;
wherein the opacifying pigment particles are $TiO_2$, ZnO, or opaque polymers;
and wherein, based on the weight of the composition:

the first and second polymer particles together have a solids content in the range of from 10 to 20 weight percent;

the extender particles have a solids content in the range of from 45 to 70 weight percent;

the pigment particles have a solids content in the range of from 3 to 15 weight percent; and

the composition has a total solids content in the range of from 60 to 85 weight percent;

wherein the w/w ratio of the first polymer particles to the second polymer particles is in the range of from 30:70 to 90:10.

The first and second polymer particles are acrylic, styrene-acrylic, urethane, alkyd, vinyl ester (e.g., vinyl acetate and vinyl versatate), and vinyl acetate-ethylene (VAE) polymeric dispersions, and combinations thereof. The polymer particles, which are preferably acrylic or styrene-acrylic latex particles, preferably have a z-average particle size by dynamic light scattering in the range of from 50 nm to 600 nm, more preferably in the range of from 70 nm to 300 nm.

As used herein, an "acrylic latex" comprises at least 30 weight percent, preferably at least 50 weight percent, and more preferably at least 80 weight percent structural units of an acrylate and/or methacrylate monomer. Acrylic latexes preferably comprise aqueous dispersions of polymer particles functionalized with methyl methacrylate and one or more acrylates selected from the group consisting of methyl acrylate, ethyl acrylate, n-butyl acrylate, 2-ethylhexyl acrylate, and 2-propylheptyl acrylate. As used herein, the term "structural unit" of a recited monomer refers to the remnant of the monomer after polymerization. For example, a structural unit of n-butyl acrylate is as illustrated:

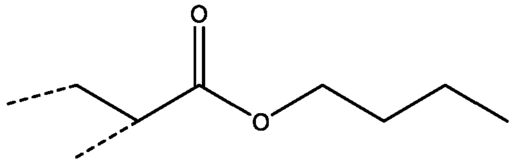

structural unit of *n*-butyl acrylate

where the dotted lines represent the points of attachment of the structural unit to the polymer backbone.

Acrylic latexes also preferably comprise structural units of an acid monomer including carboxylic acid, sulfur acid, and phosphorus acid monomers, as well as salts thereof, and combinations thereof. Examples of suitable carboxylic acid monomers include methacrylic acid, acrylic acid, and itaconic acid and salts thereof; examples of suitable sulfur acid monomers include sulfonic acid monomers such as sulfoethyl methacrylate, sulfopropyl methacrylate, styrene sulfonic acid and salts thereof, vinyl sulfonic acid and salts thereof, and 2--acrylamido-2-methyl propanesulfonic acid and salts thereof; examples of suitable phosphorus acid monomers include phosphonates and dihydrogen phosphate esters of an alcohol in which the alcohol contains or is substituted with a polymerizable vinyl or olefinic group. Preferred dihydrogen phosphate esters are phosphates of hydroxyalkyl acrylates or methacrylates, including 2-phosphoethyl methacrylate (PEM) and salts thereof.

The first polymer particles have a $T_g$, as calculated by the Fox equation, in the range of from -15 °C, and preferably from -10 °C, to 30 °C. The second polymer particles preferably have a $T_g$, as calculated by the Fox equation, in the range of from 50 °C, to 110 °C, preferably to 90 °C. The second polymer particles have a $T_g$ that is at least 20 C° higher than the second polymer particles.

The w/w ratio of first polymer particles to the second polymer particles is in the range of from 30:70, preferably from 50:50 to 90:10, preferably to 70:30, and the first and second polymer particles together have a solids content in the range of from 10 to 20, preferably to 18, and more preferably to 17 weight percent.

As used herein, the term extender refers to any white, translucent, or semi-transparent particulate filler that does not impart a significant (non-white) color or hue. Examples of suitable inorganic extenders include silica; the silicates and aluminosilicates talc, clay, mica, and sericite; $CaCO_3$; nepheline syenite; feldspar; wollastonite; kaolinite; dicalcium phosphate; and diatomaceous earth. Preferably, the extender particles have a solids content in the range of from 50 to 65 weight percent, based on the weight of the composition. A preferred extender is $CaCO_3$.

The pigment particles are the opacifying pigments $TiO_2$, ZnO, and hollow opacifying pigments (opaque polymers). Preferred pigment particles are $TiO_2$ particles at a solids content concentration in the range of from 5 to 10 weight percent, based on the weight of the composition.

The composition further includes ammonia or a volatile amine or a salt thereof in sufficient amounts to achieve a pH in the range of 8, preferably from 8.5, more preferably from 9, to 12, preferably to 11. As used herein, the term "volatile amine" is an amine with a boiling of not greater than 250 °C. Examples of suitable volatile amines include 2-amino-2-methyl-1-propanol, dimethylaminoethanol, and monoisopropanol amine.

The composition advantageously further comprises, based on the weight of the composition, from 0.01, more preferably from 0.05 weight percent to 2, more preferably to 1, and most preferably to 0.5 weight percent of a polyamine, which is a polymer containing at least 5 amine groups. Examples of polyamines include polyethyleneimines (polyaziridines) and polymers or copolymers of a monoethylenically unsaturated amine comprising from 20, preferably from 50 weight percent, to 100 weight percent structural units of the monoethylenically unsaturated amine. Classes of monoethylenically unsaturated amines suitable for making polyamine homopolymers and copolymers include alkylaminoalkyl acrylates and methacrylates, acrylamides, methacrylamides, N-acryloxyalkyl-oxazolidines, N-acryloxyalkyltetrahydro-1,3-oxazines, and hydroxyalkylaminoethyl acrylates and methacrylates. Specific examples of suitable monoethylenically unsaturated amines include dimethylaminoethyl acrylate, dimethylaminoethyl methacrylate, N-β-aminoethyl acrylamide, N-β-aminoethyl methacrylamide, N-(monomethylaminoethyl)-acrylamide, N-(monomethylaminoethyl)-methacrylamide, 2-(3-oxazolidinyl)ethyl methacrylate, 2-(3-oxazolidinyl)ethyl acrylate, 3-(γ-methacryloxypropyl)-tetrahydro-1,3-oxazine, 3-β-methacryloxyethyl-2-methyl-2-propyloxazolidine, 3-(β-methacryloxyethyl)-2,2-pentamethylene oxazolidine, N-2-(2-methacryloxy)ethyl-5-methyl-oxazolidine, N-2-(2-methacryloxy)ethoxy-5-methyl-oxazolidine, N-2-(2-acryloxy)ethyl-5-methyl-oxazolidine, 2-(3-oxazolidinyl)ethyl methacrylate, 2-((2-hydroxyethyl)amino)ethyl methacrylate, 2-((2-hydroxyethyl)amino)ethyl methacrylate, 2-((2-hydroxypropyl)amino)ethyl methacrylate, and 2-((2-hydroxypropyl)amino)ethyl acrylate. A preferred polyamine is poly(oxazolidinoethyl methacrylate).

The weight average molecular weight ($M_w$) of the polyamine, measured using size exclusion chromatography (SEC), as described in U.S. 10,662,337, column 5, line 50 to 67, is preferably in the range of from 500, more preferably from 5000, and most preferably from 10,000 g/mol, to preferably 500,000, more preferably to 100,000, and most preferably to 80,000 g/mol.

The pigment volume concentration of the composition is preferably in the range of from 60, preferably from 65, to 90, preferably to 85. PVC is calculated by the following equation:

$$PVC = \left[\frac{Vol\ (Opacifying\ Pigment + Extender + 2nd\ Polymer\ Particles)}{Vol\ (Opacifying\ Pigment + Extender + 1st\ and\ 2nd\ Polymer\ Particles)}\right] x\ 100$$

The composition of the present invention advantageously comprises one or more additional materials including surfactants, defoamers, dispersants, coalescents, rheology modifiers, and solvents. Coalescents are especially desirable for first polymer particles that are not readily film forming at ambient temperatures. For such first polymer particles, a coalescent is used at sufficiently high concentrations to promote film formation of the first polymer particles at ambient temperatures, but low enough so as not to promote film formation of the second polymer particles. Thus, the first polymer particles are film-forming alone or in the presence of a coalescent. As used herein, "film-forming" refers to a minimum film formation at or below ambient temperature, preferably ≤ 22 °C in accordance with ASTM D2354.

The composition of the present invention is useful as a traffic paint. The composition is advantageously applied to a cement, concrete, or asphalt substrate at a wet thickness coating in the range of from 0.1 mm, or from 0.3 mm to 5 mm, or 3 mm, then allowed to dry. The method may include drop-on addition and adherence of glass beads, sand, quartz, $Al_2O_3$, and bauxite before the coating dries. Methods of surface treatment with such additives are well known in the art. (See US 5,672,379, col. 15, lines 3-35.)

It has surprisingly been discovered that critical combinations of comparatively high $T_g$ non-film-forming second polymer particles and comparatively low $T_g$ film-forming first polymer particles provide improved color retention with little to no loss of durability. In contrast, higher concentrations of extender particles and lower concentrations of low $T_g$ first polymer particles provide little to no improvement in color retention and significant loss of durability.

## Examples

In the following examples, dispersant refers to TAMOL™ 963 Dispersant (A Trademark of The Dow Chemical Company or its Affiliates); defoamer refers to Drewplus L-493 Defoamer; $TiO_2$ refers to TiPure R-900 titanium dioxide; $CaCO_3$ refers to Hubercarb Q6 calcium carbonate; attapulgite refers to Attagel 50 Attapulgite gel; coalescent refers to Texanol Coalescent; and HEC refers to Natrosol H4BR hydroxyethylcellulose.

All aqueous dispersions of polymer particles (latexes) were prepared using standard emulsion polymerization techniques. The monomer concentrations used to make the first polymer particles were 56.3% butyl acrylate, 42.2% methyl methacrylate and 1.5% methacrylate acid. The monomer concentrations used to make the second polymer particles were 20% butyl acrylate, 78.7% methyl methacrylate and 1.5% methacrylic acid. The first and second polymer particles had a z-average particle size by dynamic light scattering of approximately 200 nm and a solids content of 50 weight percent. To each latex was added poly(oxazolidinoethyl methacrylate) (4.6 g of a 27% w/w aqueous solution added per 100 g of latex solids).

Aqueous road marking compositions were prepared by adding the first and second polymers (to a plastic pail while stirring with an overhead mixer. Dispersant (0.33 weight percent), defoamer (0.25 weight percent), attapulgite (0.08 weight percent), $TiO_2$, $CaCO_3$, and methanol (1.6 weight percent) were sequentially added under high shear agitation and then mixed for 15 min. Methanol, coalescent, water, and the HEC (2% w/w aq. solution) were then added sequentially, at an agitation speed necessary to maintain a deep vortex. Once all the ingredients were added, the formulation was mixed for 15 min. The formulation was then allowed to stand for at least 24 h before application. The amount of HEC was varied to target an initial viscosity of 85 to 90 KU.

The aqueous compositions were spray applied to a Portland cement road by means of a walk-behind, self-propelled striping machine in accordance with ASTM D713. The compositions were applied at a thickness of 380 μm as transverse lines to a lane traversed by ~10,000 vehicles per day averaged over the course of a year. The lines were allowed to dry for at least 2 h before traffic was allowed to resume. The durability of the coatings was measured according to ASTM D913 and recorded as percent paint presence remaining in the wheel track region of the painted lines.

Table 1 shows the impact of several properties on the substitution of varying amounts of low $T_g$ polymer with either

high $T_g$ polymer or $CaCO_3$ in the paint. Comparative Example 1 uses 15.1 wt% the low $T_g$ polymer. Inventive Examples 1, 2, and 3 replace 20%, 33.3% and 50% by weight of the low $T_g$ polymer with an equal volume portion of the high $T_g$ polymer. Comparative Examples 2 and 3 replace 20% and 33.3% by weight of the low $T_g$ polymer with equal volumes of $CaCO_3$.

In the Table, composition stability is evaluated in terms of settling (in mm) and viscosity change (in KU) of the aqueous composition after 7 days at 60 °C and settling (in mm) was evaluated after 1-month shelf stability testing at room temperature. 90% Relative humidity Dry No Pick-Up (per ASTM D-711) is reported in minutes. WT (Wheel Track) presence, which was measured on an unbeaded line 55 days after application, is reported as a percent in accordance with ASTM D913, and is a measure of durability. ΔE, as measured in accordance with ASTM D2244, is an indicator of color retention (smaller ΔE corresponds to less color change), and is reported as a percent of color change at 55 days of the Comparative Example 1 containing only soft polymer. The term high $T_g$:low $T_g$ refers to the v/v ratio of the two polymers; and $CaCO_3$:low $T_g$ refers to the v/v ratio of the additional $CaCO_3$ above what is used in the comparative example. $CaCO_3$, inorganics, polymer solids, soft polymer, hard polymer, water, volume solids, and weight solids are all reported based on weight of the total paint. The hard polymer is considered pigment for the PVC calculation. The word "Pass" is used to indicate the acceptable threshold for the measured property.

Table 1 - Properties of Paints with High $T_g$ Polymer

| Lab ID | Comp 1 | Ex 1 | Ex 2 | Ex 3 | Comp 2 | Comp 3 | Pass |
|---|---|---|---|---|---|---|---|
| high $T_g$:low $T_g$ | 0:100 | 20:80 | 33:67 | 50:50 | - | - | |
| $CaCO_3$:low $T_g$ | - | - | - | - | 20:80 | 33:67 | |
| 7-d HeatAge: Settling | 0 | 0 | 0 | 0 | 0 | 8.0 | <5 |
| 7-d HeatAge: ΔKU | 6.3 | 8.4 | 6.7 | 6.6 | 5.7 | 9.0 | <10 |
| 1-mo shelf Settling | 3.0 | 3.0 | 1.0 | 0 | 4.0 | 12.0 | <10 |
| 90%RH Dry No Pick-Up | 32 | 28 | 28 | 24 | 44 | 56 | <30 |
| WT % Presence | 100 | 100 | 100 | 98 | 100 | 30 | >80 |
| ΔE Color Change | 100.0% | 83.5% | 73.9% | 59.4% | 93.1% | 92.3% | <90% |
| Soft Polymer $T_g$ °C | -4 | -4 | -4 | -4 | -4 | -4 | |
| Hard Polymer $T_g$ °C | N/A | 58 | 58 | 58 | N/A | N/A | |
| Wt % $CaCO_3$ | 54.3% | 56.5% | 56.5% | 56.5% | 59.0% | 62.0% | |
| Wt % $TiO_2$ | 7.1% | 7.1% | 7.1% | 7.1% | 6.8% | 6.6% | |
| Wt % Inorganics | 61.4% | 63.6% | 63.6% | 63.6% | 65.8% | 68.6% | |
| weight % Polymer Solids | 15.1% | 15.1% | 15.1% | 15.1% | 11.6% | 9.4% | |
| weight % Soft Polymer | 15.1% | 12.1% | 10.1% | 7.6% | 11.6% | 9.4% | |
| weight % Hard Polymer | 0.0% | 3.0% | 5.0% | 7.6% | 0.0% | 0.0% | |
| PVC | 61.5 | 69.2 | 74.3 | 80.8 | 69.0 | 74.0 | |
| weight % Water | 0.2 | 0.2 | 0.2 | 0.2 | 0.2 | 0.2 | |
| Volume Solids | 60.0 | 60.0 | 60.0 | 60.0 | 59.8 | 59.9 | |
| Weight Solids | 77.0 | 77.0 | 77.0 | 77.0 | 77.7 | 79.4 | |

The data show across the board passes for the tests for heat age settling, ΔKU, 90% RH dry no pick-up, and ΔE. In contrast, the comparative paints that do not contain the non-film forming second polymer particles as a partial substitute for the film-forming particles fail in one or more of the tests the paints were subjected to. Notably, all the comparative paints fail for ΔE (color retention) and dry no pick-up.

## Claims

1. A composition comprising an aqueous dispersion of 1) first polymer particles having a calculated $T_g$ in the range of from -15 °C to 30 °C; 2) second polymer particles having a calculated $T_g$ in the range of from 50 °C to 110 °C; 3) extender particles; 4) opacifying pigment particles; and 5) ammonia or a volatile amine or a salt thereof;

with the proviso that the second polymer particles have a $T_g$ of at least 20 C° higher than the first polymer particles; wherein the first and second polymer particles are acrylic, styrene-acrylic, urethane, alkyd, vinyl ester, or vinyl acetate-ethylene polymeric dispersions, or combinations thereof;
wherein the extender particles comprise silica, talc, clay, mica, sericite, $CaCO_3$, nepheline syenite, feldspar, wollastonite, kaolinite, dicalcium phosphate, or diatomaceous earth;
wherein the opacifying pigment particles are $TiO_2$, ZnO, or opaque polymers;
and wherein, based on the weight of the composition:

the first and second polymer particles together have a solids content in the range of from 10 to 20 weight percent;
the extender particles have a solids content in the range of from 45 to 70 weight percent;
the opacifying pigment particles have a solids content in the range of from 3 to 15 weight percent; and
the composition has a total solids content in the range of from 60 to 85 weight percent;
wherein the w/w ratio of the first polymer particles to the second polymer particles is in the range of from 30:70 to 90:10.

**2.** The composition of Claim 1 which further comprises from 0.01 to 2 weight percent, based on the weight of the composition, of a polyamine; wherein the weight-to-weight ratio of first polymer particles to the second polymer particles is in the range of from 50:50 to 90:10; and wherein the first and second polymer particles are acrylic or styrene-acrylic polymers

**3.** The composition of Claim 2 wherein the composition has a pigment volume concentration (PVC) is the range of from 60 to 90.

**4.** The composition of Claim 3 wherein the base is ammonia, 2-amino-2-methyl-1-propanol, dimethylaminoethanol, or monoisopropanol amine; wherein the polyamine is poly(oxazolidinoethyl methacrylate); and wherein the composition has a pH in the range of from 8.5 to 12.

**5.** The composition of Claim 3 wherein the PVC is in the range of from 65 to 85.

**6.** The composition of Claim 1 which further comprises one or more additional materials selected from the group consisting of surfactants, defoamers, dispersants, coalescents, rheology modifiers, and solvents.

**7.** The composition of Claim 5 which further comprises a surfactant, a defoamer, a dispersant, and a rheology modifier.

**8.** The composition of Claim 1 which comprises a coalescent at a high enough concentration to promote film formation of the first polymer particles at ambient temperature, but low enough so as not to promote film formation of the second polymer particles.

## Patentansprüche

**1.** Zusammensetzung, umfassend eine wässrige Dispersion von 1) ersten Polymerpartikeln mit einer berechneten $T_g$ im Bereich von -15 °C bis 30 °C; 2) zweiten Polymerpartikeln mit einer berechneten $T_g$ im Bereich von 50 °C bis 110 °C; 3) Extender-Partikeln; 4) opazifierenden Pigmentteilchen; und 5) Ammoniak oder einem flüchtigen Amin oder einem Salz davon;

mit der Maßgabe, dass die zweiten Polymerpartikel eine $T_g$ von mindestens 20 °C höher als die ersten Polymerpartikel aufweisen;
wobei die ersten und zweiten Polymerpartikel Acryl-, Styrol-Acryl-, Urethan-, Alkyd-, Vinylester- oder Vinylacetat-Ethylen-Polymerdispersionen oder Kombinationen davon sind;
wobei die Extender-Partikel Siliciumdioxid, Talkum, Ton, Glimmer, Serizit, $CaCO_3$, Nephelinsyenit, Feldspat, Wollastonit, Kaolinit, Dicalciumphosphat oder Kieselgur umfassen;
wobei die opazifizierenden Pigmentpartikel $TiO_2$, ZnO oder opake Polymere sind;
und wobei auf Basis des Gewichts der Zusammensetzung:

die ersten und zweiten Polymerpartikel zusammen einen Feststoffgehalt im Bereich von 10 bis 20 Gewichtsprozent aufweisen;

wobei die Extender-Partikel einen Feststoffgehalt im Bereich von von 45 bis 70 Gewichtsprozent aufweisen;
wobei die opazifizierenden Pigmentpartikel einen Feststoffgehalt im Bereich von von 3 bis 15 Gewichtsprozent aufweisen; und
wobei die Zusammensetzung einen Gesamtfeststoffgehalt im Bereich von 60 bis 85 Gewichtsprozent aufweist;
wobei das Gewichtsverhältnis der ersten Polymerpartikel zu den zweiten Polymerpartikeln im Bereich von 30:70 bis 90:10 liegt.

2. Zusammensetzung nach Anspruch 1, die ferner - bezogen auf das Gewicht der Zusammensetzung - von 0,01 bis 2 Gewichtsprozent eines Polyamins umfasst; wobei das Gewichtsverhältnis der ersten Polymerpartikel zu den zweiten Polymerpartikeln im Bereich von 50:50 bis 90:10 liegt; und wobei die ersten und zweiten Polymerpartikel Acryl- oder Styrol-Acryl-Polymere sind.

3. Zusammensetzung nach Anspruch 2, wobei die Zusammensetzung eine Pigmentvolumenkonzentration (PVC) im Bereich von 60 bis 90 aufweist.

4. Zusammensetzung nach Anspruch 3, wobei die Basis Ammoniak, 2-Amino-2-methyl-1-propanol, Dimethylaminoethanol oder Monoisopropanolamin ist; wobei das Polyamin Poly(oxazolidinoethylmethacrylat) ist; und wobei die Zusammensetzung einen pH-Wert im Bereich von 8,5 bis 12 aufweist.

5. Zusammensetzung nach Anspruch 3, wobei die PVC im Bereich von 65 bis 85 liegt.

6. Zusammensetzung nach Anspruch 1, die ferner ein oder mehrere zusätzliche Materialien umfasst, ausgewählt aus der Gruppe bestehend aus Tensiden, Entschäumern, Dispergiermitteln, Koaleszenzmitteln, Rheologiemodifikatoren und Lösungsmitteln.

7. Zusammensetzung nach Anspruch 5, die ferner ein Tensid, einen Entschäumer, ein Dispergiermittel und einen Rheologiemodifikator umfasst.

8. Zusammensetzung nach Anspruch 1, die ein Koaleszenzmittel in einer ausreichend hohen Konzentration umfasst, um die Filmbildung der ersten Polymerpartikel bei Umgebungstemperatur zu fördern, aber niedrig genug, um die Filmbildung der zweiten Polymerpartikel nicht zu fördern.

## Revendications

1. Composition comprenant une dispersion aqueuse de 1) premières particules polymères ayant une $T_g$ calculée comprise dans la plage allant de - 15 °C à 30 °C ; 2) secondes particules polymères ayant une $T_g$ calculée comprise dans la plage allant de 50 °C à 110 °C ; 3) particules de charge ; 4) particules de pigment opacifiant ; et 5) ammoniac ou une amine volatile ou un de celle-ci ;

    à condition que les secondes particules polymères aient une $T_g$ supérieure d'au moins 20 °C à celle des premières particules polymères ;
    dans laquelle les premières et secondes particules polymères sont des dispersions de polymère de type acrylique, styrène-acrylique, uréthane, alkyde, ester de vinyle, ou acétate de vinyle-éthylène, ou des combinaisons de ceux-ci ;
    dans laquelle les particules de charge comprennent de la silice, du talc, de l'argile, du mica, de la séricite, du $CaCO_3$, de la syénite néphélinique, du feldspath, de la wollastonite, de la kaolinite, du phosphate dicalcique, ou de la terre de diatomées ;
    dans laquelle les particules de pigment opacifiant sont du $TiO_2$, du ZnO, ou des polymères opaques ;
    et dans laquelle, en fonction du poids de la composition :

        les premières et secondes particules polymères ont conjointement une teneur en matières solides comprise dans la plage allant de 10 à 20 pour cent en poids ;
        les particules de charge ont une teneur en matières solides comprise dans la plage allant de 45 à 70 pour cent en poids ;
        les particules de pigment opacifiant ont une teneur en matières solides comprise dans la plage allant de 3 à 15 pour cent en poids ; et

la composition a une teneur en matières solides comprise dans la plage allant de 60 à 85 pour cent en poids ; dans laquelle le rapport p/p des premières particules polymères aux secondes particules polymères est compris dans la plage allant de 30:70 à 90:10.

**2.** Composition selon la revendication 1, qui comprend en outre de 0,01 à 2 pour cent en poids, en fonction du poids de la composition, d'une polyamine ; dans laquelle le rapport poids-à-poids des premières particules polymères aux secondes particules polymères est compris dans la plage allant de 50:50 à 90:10 ; et dans laquelle les premières et secondes particules polymères sont des polymères de type acrylique ou styrène-acrylique

**3.** Composition selon la revendication 2, dans laquelle la composition a une concentration en volume de pigment (PVC) comprise dans la plage allant de 60 à 90.

**4.** Composition selon la revendication 3, dans laquelle la base est l'ammoniac, le 2-amino-2-méthyl-1-propanol, le diméthylaminoéthanol, ou la monoisopropanol amine ; dans laquelle la polyamine est le poly(méthacrylate d'oxazolidinoéthyle) ; et dans laquelle la composition a un pH compris dans la plage allant de 8,5 à 12.

**5.** Composition selon la revendication 3, dans laquelle la PVC est comprise dans la plage allant de 65 à 85.

**6.** Composition selon la revendication 1, qui comprend en outre une ou plusieurs matières supplémentaires choisies dans le groupe constitué d'agents tensioactifs, antimousses, dispersants, agents de coalescence, modificateurs de rhéologie, et solvants.

**7.** Composition selon la revendication 5, qui comprend en outre un agent tensioactif, un antimousse, un dispersant, et un modificateur de rhéologie.

**8.** Composition selon la revendication 1, qui comprend un agent de coalescence à une concentration suffisamment élevée pour favoriser la formation d'un film des premières particules polymères à température ambiante, mais suffisamment faible pour ne pas favoriser la formation d'un film des secondes particules polymères.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3467053 A
- EP 0764699 A
- WO 2019211473 A
- WO 2016209691 A
- WO 2014047094 A
- JP 2005097574 A
- US 10662337 B
- US 5672379 A